## Europäisches Patentamt
## European Patent Office
## Office européen des brevets

(11) Veröffentlichungsnummer: **0 129 841**
A2

(12) **EUROPÄISCHE PATENTANMELDUNG**

(21) Anmeldenummer: 84107079.0

(22) Anmeldetag: 20.06.84

(51) Int. Cl.⁴: **G 11 B 5/41**
**G 11 B 23/04**

(30) Priorität: 22.06.83 DE 8318007 U

(43) Veröffentlichungstag der Anmeldung:
02.01.85 Patentblatt 85/1

(84) Benannte Vertragsstaaten:
AT BE CH DE FR GB IT LI LU NL SE

(71) Anmelder: Willburger, Ulrich
Auf der Schuchen 27
D-8110 Seehausen(DE)

(72) Erfinder: Willburger, Ulrich
Auf der Schuchen 27
D-8110 Seehausen(DE)

(74) Vertreter: Patentanwälte Ruff und Beier
Neckarstrasse 50
D-7000 Stuttgart 1(DE)

(54) Reinigungskassette.

(57) Eine Reinigungskassette für schnellaufende Kassettengeräte enthält ein Gehäuse (11), das in seiner Form und Abmessung mindestens teilweise der normalen Magnetbandkassette entspricht. In dem Gehäuse (11) ist ein Reinigungsband (16) untergebracht, das an dem Magnetkopf vorbeigeführt wird. Das Reinigungsband (16) weist keine Verbindung zum Antrieb des Kassettengerätes auf, sondern wird zu seiner Weitertewegung manuell von außen angetrieben.

FIG.1

EP 0 129 841 A2

Croydon Printing Company Ltd.

A 21 257 EP

Anmelder:     Ulrich Willburger
              Auf der Schuchen 27
              8110 Seehausen

## Reinigungskassette

Die Erfindung betrifft eine Reinigungskassette für schnell-
laufende Kassettengeräte, mit einem dem zugehörigen Kassettengehäuse entsprechenden Kassettengehäuse und einem darin
untergebrachten Reinigungsband, das mindestens teilweise
etwa den gleichen Verlauf aufweist, wie das Magnetband
bei einer Magnetbandkassette.

Es ist bei handelsüblichen Kassettenrecordern, die sich
auch als Zubehör für Kleincomputer verwenden lassen, bekannt,
Reinigungskassetten zum Reinigen der Magnetköpfe zu verwenden.
Diese Reinigungskassetten besitzen die gleiche Konfiguration
wie die zu dem jeweiligen Kassettenrecorder gehörende
Magnetbandkassette. Daher erfolgt der Antrieb des Reinigungsbandes auch mit Hilfe des Antriebes für die Magnetbandkassetten.

Es wurden nun für Computeranwendungen Magnetbandgeräte
entwickelt, bei denen das in Magnetbandkassetten untergebrachte Magnetband mit sehr hoher Geschwindigkeit, d.h. im Bereich von mehr als 2 m/Sek., an dem Magnetkopf vorbeibewegt
wird. Bei diesen hohen Geschwindigkeiten bildet sich ein
Luftpolster zwischen Magnetband und Magnetkopf, so daß
sich im Betrieb des Magnetbandgerätes dort Staub ansammeln
kann. Dieser Staub führt bei längerem Betrieb dazu, daß
der Zwischenraum zwischen dem Magnetkopf und dem Magnetband
zu groß wird, so daß nicht mehr mit Sicherheit gelesen
bzw. geschrieben werden kann. Darüber hinaus erfolgt aufgrund
der hohen Geschwindigkeit eine starke elektrostatische
Aufladung, die das Anziehen von Staubpartikeln weiter
begünstigt.

Bei derartigen schnellaufenden Magnetbandgeräten ist es
nicht möglich, Reinigungskassetten zu verwenden, die vom
Magnetband mit der Kassettenantriebsmechanik angetrieben
werden, da dies zu viel zu hohen Geschwindigkeiten des
Reinigungsbandes führen würde, das dann wie ein Schmirgelband
wirken würde.

Der Erfindung liegt die Aufgabe zugrunde, eine Reinigungskassette für schnellaufende Kassettengeräte zu schaffen,
mit deren Hilfe eine problemlose Reinigung der Magnetköpfe
möglich ist.

Zur Lösung dieser Aufgabe schlägt die Erfindung eine
Reinigungskassette für schnellaufende Kassettengeräte, mit
einem dem zugehörigen Magnetbandkassettengehäuse entsprechenden Kassettengehäuse und einem darin von einer Vorratsspule zu einer Aufwickelspule geführten Reinigungsband,
das mindestens in dem einem Magnetkopf entsprechenden Bereich etwa den gleichen Verlauf aufweist, wie das Magnetband bei der Magnetbandkassette, sowie mit einer handbetätigbaren Antriebseinrichtung zum manuellen Transport des
Reinigungsbandes. Durch diese Ausbildung wird es möglich,
auch bei den schnellaufenden Kassettengeräten eine ordnungsgemäße Reinigung der Magnetköpfe vorzunehmen, ohne daß die
Gefahr einer Beschädigung oder einer nicht ausreichenden
Reinigung besteht. Das Gehäuse der Reinigungskassette kann
dabei

so ausgestaltet sein, daß an den Magnetkassetten angebrachte Vorsprünge o.dgl. zum Betätigen von Einrichtungen am
Magnetbandgerät an den Reinigungskassetten nicht vorhanden
sind.

In Weiterbildung kann vorgesehen sein, daß die Reinigungskassette eine Rücklaufsperre aufweist. Damit soll verhindert werden, daß das Reinigungsband, das schon benutzt
wurde, nochmals benutzt wird, was zu einer nochmaligen
Anlagerung von bereits entferntem Schmutz führen würde.

Die Antriebsvorrichtung kann vorzugsweise, wie nach einem
weiteren Merkmal der Erfindung vorgesehen ist, eine mit
einer Umfangsrändelung versehene Walze o.dgl. aufweisen.
Besonders günstig ist es, wenn die Antriebsvorrichtung
eine mit einer Umfangsrändelung versehene Aufwickelspule
aufweist. Dabei können insbesondere beide den Kernabschnitt
einschließende Flansche der Spule an ihrem Umfang mit
einer Rändelung versehen sein. Die mit einer Rändelung
versehene Aufwickelspule kann beispielsweise an einer
Ecke des Gehäuses angeordnet sein, so daß ein relativ
großer Bereich ihres Umfangs von außen zugänglich ist.

In Weiterbildung kann vorgesehen sein, daß die Rücklaufsperre von einer federbelasteten, mit der Umfangsrändelung
zusammenwirkenden Sperrklinke gebildet ist. Damit wird
also die Umfangsrändelung gleichzeitig für eine weitere
Funktion ausgenutzt, nämlich für das Verriegeln gegenüber
einer Rückwärtsdrehung. Besonders günstig ist es, wenn
die Sperrklinke von einer einseitig eingespannten Blattfeder gebildet ist. In diesem Fall kann das freie Ende
dieser Blattfeder etwa tangential an dem mit der Rändelung versehenen Teil der Reinigungskassette anliegen, so daß
selbst eine schwache Rücklaufsperre ausnutzbar ist.

In Weiterbildung kann nach der Erfindung vorgesehen sein,
daß das Reinigungsband von einer Bremsrolle straff gehalten ist. Diese Bremsrolle schließt sich vorzugsweise unmittelbar an die Vorratsspule für das Reinigungsband an,
wobei das Zusammenwirken von Bremsrolle und Rücklaufsperre
zu einer straffen Führung des Reinigungsbandes führt.

Weitere Merkmale, Einzelheiten und Vorzüge der Erfindung
ergeben sich aus der folgenden Beschreibung einer bevorzugten Ausführungsform der Erfindung sowie anhand der
Zeichnung. Hierbei zeigen:

Fig. 1    eine perspektivische Ansicht einer Reinigungskassette nach der Erfindung;

Fig. 2    eine Ansicht der Kassette von links vorne

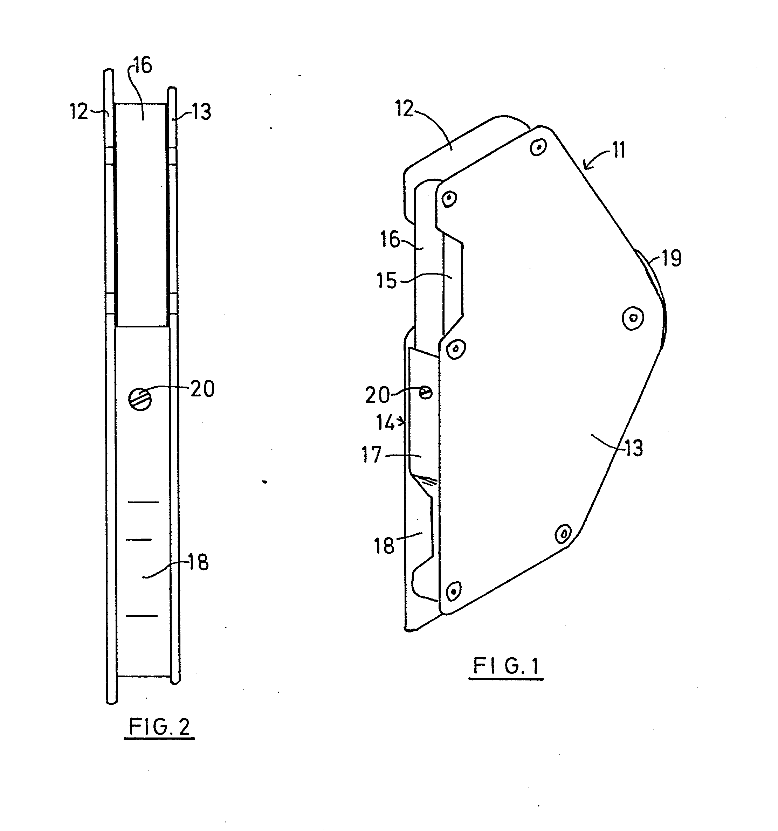

          in Fig. 1;

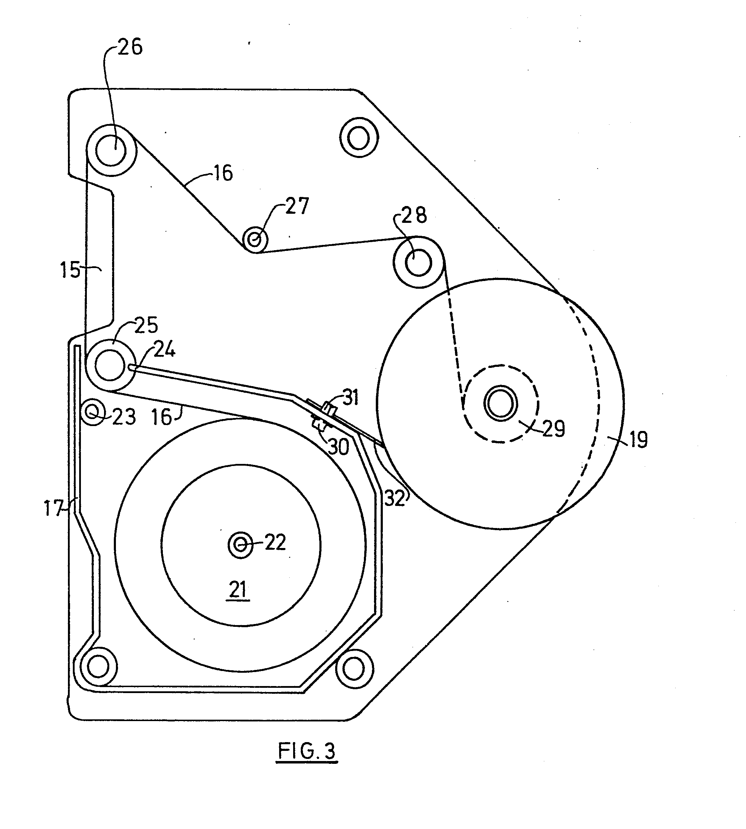

Fig. 3    eine Aufsicht auf die Kassette von rechts
          vorne in Fig. 1 bei abgenommener Deckplatte.

Fig. 1    eine Aufsicht auf eine Bodenplatte einer
          Seitenausführungsform;

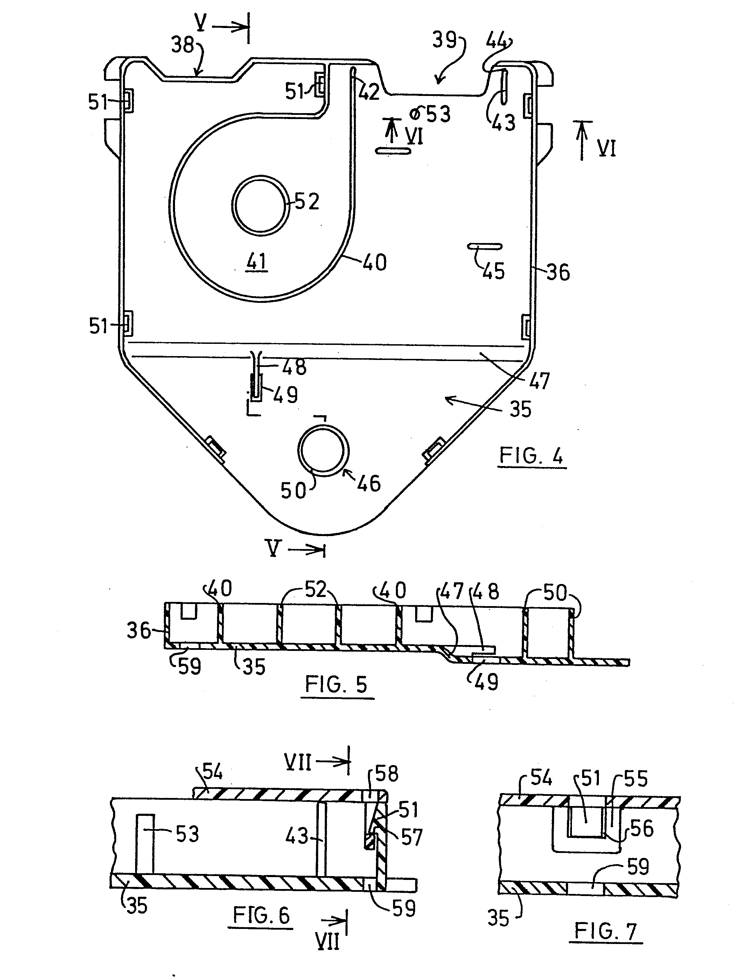

Fig. 5    einen Schnitt etwa nach Linie V-V in
          Fig. 4;

Fig. 6    einen vergrößerten Schnitt nach Linie
          VI-VI in Fig. 4 mit aufgesetztem Deckel;

Fig. 7    einen Schnitt etwa nach Linie VII-VII in
          Fig. 6;

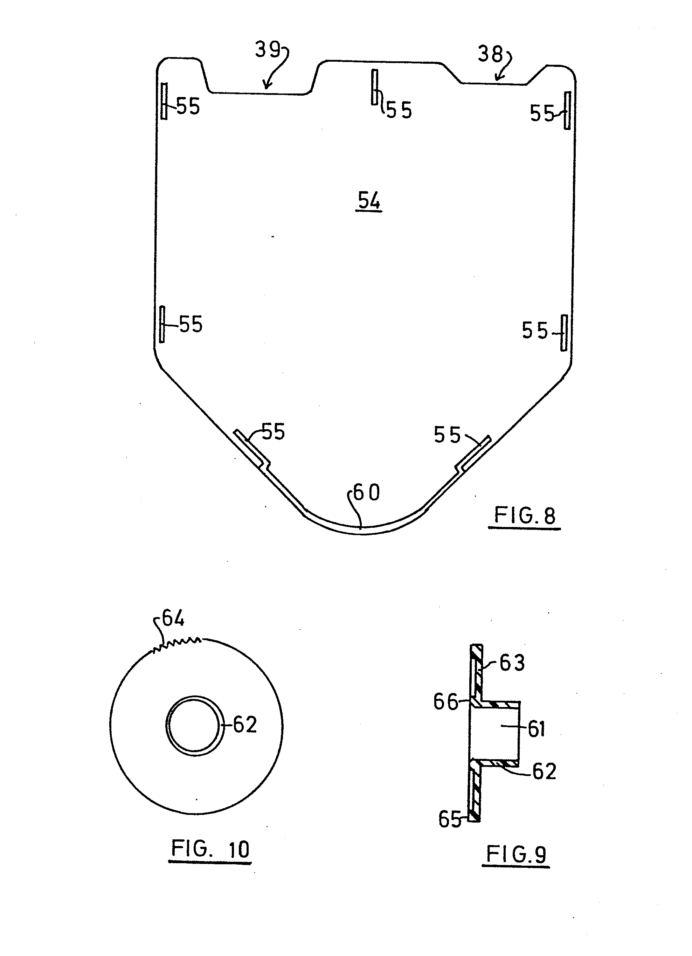

Fig. 8    eine Ansicht der Deckelplatte von der
          Unterseite her gesehen;

0129641

Fig. 9     einen Schnitt durch eine Aufwickelspule;

Fig. 10    eine schematische Ansicht der Aufwickelspule von rechts in Fig. 9.

Das Gehäuse 11 der in Fig. 1 dargestellten Reinigungskassette enthält eine Bodenplatte 12, die in Fig. 1 nach
links hinten gerichtet ist, sowie eine Deckplatte 13,
die mit Hilfe von einigen Walzen oder Bolzen miteinander
verschraubt sind. Die Bodenplatte 12 und die Deckplatte
13 besitzen etwa die gleiche Form, wobei die Deckplatte
13 etwas kleiner ist als die Bodenplatte, wie sich insbesondere aus Fig. 2 ergibt.

An der auf den Magnetkopf hin gerichteten Stirnseite 14
der Reinigungskassette besitzen die Bodenplatte 12 und
die Deckplatte 13 einen Einschnitt 15, in dessen Bereich
das Reinigungsband 16 außerhalb des Gehäuses zu liegen
kommt, so daß in diesem Bereich eine Berührung zwischen
dem zu reinigenden Magnetkopf und dem Reinigungsband 16
möglich ist. Das Reinigungsband 16 besteht vorzugsweise
aus einem doppelt gewebten fusselfreien Baumwollband.

In Fig. 1 unterhalb des Einschnittes 15 ist das Kassettengehäuse 11 durch eine Abdeckung 17 geschlossen, die einen
abgeschlossenen Raum für die Vorratsspule des Reinigungsbandes 16 bildet. Die Abdeckung 17 ist im unteren Bereich
18 des Gehäuses 11 nach innen versetzt angeordnet, da
bei den zugehörigen Magnetbandkassetten durch diesen Teil
des Gehäuses ein Druckknopf betätigt wird, was bei Verwendung der Reinigungskassette nicht geschehen soll.

An der in Fig. 1 nach rechts hinten gerichteten Seite
ist der Umfang einer mit einer Riefelung versehenen Aufwickelspule 19 zu sehen. An dieser Aufwickelspule 19 kann der
Bediener der Reinigungskassette angreifen, um durch einige
Drehungen eine entsprechende Länge von Reinigungsband
16 an dem Magnetkopf vorbeizubewegen.

In Fig. 2 ist zu sehen, daß die Bodenplatte 12, die links
angeordnet ist, etwas größer ist als die Deckplatte 13,
die entsprechend rechts angeordnet ist. Es ist ebenfalls
zu sehen, daß die Abdeckung 17 mit Hilfe einer Schraube 20
angeschraubt ist. Der kurze Streifen Reinigungsband 16
ist ebenfalls in Fig. 2 zu sehen. Aus Fig. 2 ergibt sich
weiterhin, daß das Gehäuse 11 der Reinigungskassette keine
über die Boden- bzw. Deckplatte 13 vorspingende Teile
aufweist.

Fig. 2 zeigt nun eine Aufsicht auf die Reinigungskassette
von rechts in Fig. 2, wobei die Deckplatte 13 abgenommen
ist. Es ist zu sehen, daß das Reinigungsband auf einer
Vorratsspule 21 aufgewickelt ist, die drehbar um einen
Zapfen 22 angeordnet ist. Die Abdeckung 17 ist um die
Vorratsspule 21 herumgeführt, ihr linkes oberes Ende ist
mit der in Fig. 1 und 2 zu sehenden Schraube 20 an einem
Zapfen 23 angeschraubt, während ihr rechtes Ende 24 in
eine Axialnut in einer Bremsrolle 25 eingreift. Durch
diese Axialnut wird nicht nur das rechte Ende 24 der Abdeckung 17 festgehalten und festgelegt, sondern gleichzeitig die Drehung der Bremsrolle 25 verhindert. Das Reinigungsband 16 ist von der Vorratsspule über die Bremsrolle 25
und durch den Einschnitt 15 über eine weitere Umlenkrolle 26
geführt. Von der Umlenkrolle 26 führt das Reinigungsband 16
weiter über einen nächsten Zapfen 27 und eine weitere
Umlenkrolle 28 zu der Aufwickelspule 19, wo das freie
Ende des Reinigungsbandes 16 an dem Kern 29 der Aufwickelspule 19 befestigt, insbesondere verklebt ist.

An der rechts in der Figur vieleckig abgewinkelten Abdekkung 17 ist mit Hilfe einer Schraube 30 und einer Mutter
31 eine aus hartem Federband hergestellte Blattfeder 32,
angeschraubt, die unter spitzem Winkel an dem Außenumfang
der Aufwickelspule 19 anliegt. Da der Außenumfang der
Vorratsspule 19 mit einer in der Figur nicht zu erkennenden Rändelung versehen ist, wirkt die Blattfeder 32 als
Rücklaufsperre, so daß sich die Aufwickelspule 19 in Fig. 3
nur im Gegenuhrzeigersinn drehen läßt. Eine Drehung der
Aufwickelspule 19 im Gegenuhrzeigersinn führt zu einem
Aufwickeln des Reinigungsbandes 16 auf dem Kern 29 der
Aufwickelspule 19, so daß durch einige Drehbewegungen an der Aufwickelspule eine bestimmte Menge Reinigungsband 16
durch den Einschnitt 15 hindurchbewegt wird. Aufgrund
der Anordnung der Bremsrolle 25 wird das Reinigungsband 16
im Einschnitt 15 so straff gehalten.

Alle Zapfen und Walzen sind sowohl in der Bodenplatte
12 als auch in der Deckplatte 13 gelagert, wobei die breiteren Walzen bzw. Zapfen zum Verschrauben der Bodenplatte
an der Deckplatte dienen. Dadurch besitzt die Reinigungskassette eine ausreichend hohe mechanische Stabilität.
Anstelle von Verschraubungen können mit Vorteil auch Nietverbindungen vorgesehen sein, wodurch die Fertigung vereinfacht
wird.

Die normalen Speicherkassetten der schnellaufenden Magnetbandgeräte haben eine Bandbreite von  6,4 mm. Die Bandbreite
des Reinigungsbandes ist mit Vorteil breiter, damit stets
eine Reinigung des Magnetkopfes, unabhängig von seiner
Einstellhöhe, gewährleistet ist. Die Bandbreite beträgt
vorzugsweise 10 bis 15 mm, insbesondere ca. 12 mm (1/2
inch).

Fig. 7 zeigt eine Aufsicht auf eine Bodenplatte 35 einer
weiteren Ausführungsform. Die Ansicht entspricht etwa der
Ansicht nach Fig. 3, jedoch ist aus Gründen der Vereinfachung
der Verlauf des Reinigungsbandes nicht dargestellt. Die
Bodenplatte 35 verläuft im wesentlichen eben, sie weist
längs ihres Randes einen nach oben gerichteten Flansch 36
auf, der die Seitenwände des Gehäuses der zweiten Ausführungsform bildet. Der Flansch 36 ist an der Bodenplatte 35 einstückig angeformt, die gesamte Bodenplatte besteht aus Kunststoff. Die obere Stirnseite 37, die in das Kassettengerät
eindringt und dem Magnetkopf gegenüberliegt, weist einen
ersten vertieften Bereich 38 auf, der aufgrund seiner Vertiefung das Angreifen an einem Betätigungselement des Magnetbandgerätes verhindern soll. Der zweite ausgeschnittene Bereich 39 der Stirnseite 37 ist dazu da, daß das Reinigungsband, s. auch Fig. 3, an dem Magnetkopf angreifen kann.
Bei in dem Magnetbandgerät eingesetzter Reinigungskassette ist
der Magnetkopf (ggf. auch der Löschkopf) in diesem Bereich
angeordnet. Ebenfalls einstückig mit der Bodenplatte 35
und dem Flansch 36 ist eine Begrenzungswand 40, die über
etwa Dreiviertel ihres Umfanges Kreisform aufweist und
einen Innenraum 41 zur Aufnahme einer Vorratsspule für das
textile nicht gewobene Reinigungsband bildet. Die Begrenzungswand 40 endet an ihrem rechten oberen Ende 42 kurz vor
der Stirnseite 37 und bildet dort einen schmalen Durchlaß,
durch den das Reinigungsband aus dem Innenraum 41 nach
rechtsgeführt werden kann. Rechts von dem ausgesparten Bereich 39 weist die Bodenplatte 35 einen Steg 43 auf, der
gegenüber dem Rand 36 einen schmalen Durchgang 44 bildet,
durch den das Reinigungsband nach rechts geführt werden kann.

A 21 257 EP            - 9 -

Die Bodenplatte 35 weist einen weiteren Steg 45 auf, der
ebenfalls zur Umlenkung des Reinigungsbandes in Richtung
auf die Halterung 46 für die Aufwickelspule dient.

Auf der der Stirnseite 37 abgewandten Seite der Begrenzungswand 40 weist die Bodenplatte 35 eine Abstufung auf, die
aus Fig. 5 noch deutlicher hervorgeht. Im Bereich dieser
Stufe 47 ist an der Bodenplatte 35 einstückig eine federnde
Zunge 48 angeformt, in deren Bereich die Bodenplatte 35
ein rechteckiges Loch 49 aufweist. Dieses Loch 49 dient
zur leichteren Herstellung der Zunge 48 einstückig mit der
Bodenplatte 35.

Jenseits der Stufe 47 besitzt die Bodenplatte 35 etwa die
Form eines gleichschenkligen rechtwinkligen Dreiecks mit abgerundeter Spitze. Etwa in der Mitte dieses Dreieckes ist die
Halterung 46 für eine Vorratsspule angeordnet, die aus einem hohlzylindrischen Ringansatz 50 besteht, der ebenfalls
einstückig mit der Bodenplatte 35 ist.

Im Bereich dieses zylindrischen Ansatzes 50 ist kein
Flansch 36 mehr vorhanden, so daß hier die Bodenplatte 35
keinen Rand für das Gehäuse bildet.

An der Innenseite des Flansches 36 sind mehrere nach innen
gerichtete Vorsprünge 51 angeordnet, deren Form aus Fig. 6
noch hervorgeht. Einer dieser Vorsprünge 51 ist im oberen
Bereich der Begrenzungswand 40 angeformt. Im Innenraum 41
innerhalb der Begrenzungswand 40 ist ebenfalls ein hohlzylindrischer Ansatz 52 einstückig angeformt, der als Lagerung für eine Vorratsspule für das Reinigungsband dient.

Unterhalb des ausgesparten Bereiches 39 ist ein zylindrischer Zapfen 53 angeordnet, auf den eine Andrückrolle aufsetzbar ist, die das Reinigungsband gegen den Magnetkopf andrückt.

Fig. 5 zeigt die Einstückigkeit der Bodenplatte 35 mit dem Flansch 36, der Begrenzungswand 40 und den zylindrischen Ansätzen 50 und 52. Ebenfalls zu sehen ist der Vorsprung 51 an der Begrenzungswand 40 und ein weiterer Vorsprung 51 an dem Flansch 36.

Jenseits der Stufe 47 verläuft die Bodenplatte 35 etwas tiefer als im übrigen Bereich, wobei die Abmessungen derart gewählt sind, daß der Bereich in Fig. 5 von links bis zur Stufe 47 etwa der Größe einer normalen Magnetbandkassette entspricht. Die Magnetbandgeräte sind derart ausgebildet, daß beim Einführen einer Kassette in das Gerät diese bis zu diesem Bereich in dem Gerät angeordnet ist, während der Teil rechts von der Stufe 47 in Fig. 5 außerhalb des Gerätes liegt.

Fig. 6 zeigt einen Teilschnitt längs Linie VI-VI in Fig. 4, diesmal mit aufgesetztem Deckel 54. Der Deckel 54 ist ebenfalls aus Kunststoff und hat auf seiner Unterseite, d.h. der in das Innere des Gehäuses gerichteten Seite, etwa U-förmige Ansätze 55, s. Fig. 7. Die Abmessungen der U-förmigen Ansätze 55 sind derart gewählt, daß die Vorsprünge 51 an der Innenseite des Flansches 36 bzw. der Begrenzungswand 40 in die Innenöffnung 56 der U-förmigen Ansätze 55 eingreifen können. Die Form der Vorsprünge 51 geht aus Fig. 6 hervor, aus der zu sehen ist, daß die Vorsprünge 51 keilförmig nach unten sich verbreiternd verlaufen und eine nach unten gerichtete Schulter 57 bilden, die zu einer Verriegelung in der Innenöffnung 56 der Ansätze 55 des Deckels 54 führen. Da die Bodenplatte 35 insgesamt 7 derartige Vorsprünge 51 und der Deckel 54 ebenfalls 7 Ansätze 55 aufweist, erfolgt eine sichere Verriegelung und Festlegung des Deckels 54 an der Bodenplatte 35.

Oberhalb der Innenöffnung 56 der Ansätze 55 weist der Deckel wiederum ein Loch 58 auf, das zur einfacheren Herstellung der Ansätze 55 dient. Das gleiche gilt auch für die Vorsprünge 51 an der Bodenplatte 35, die ebenfalls mit Löchern 59 in der Bodenplatte 35 fluchten.

Aus Fig. 8, die den Deckel 54 von unten zeigt, geht hervor, daß die Ansätze 55 etwa gleichmäßig über den Umfang verteilt angeordnet sind. Drei Ansätze 55 gehen einstückig in einen im Bereich des abgerundeten Winkels angeordneten Flansch 60 über, wobei der Flansch dicht am Rand des Deckels 54 verläuft, während die Ansätze 55 um die Dicke des Flansches 36 gegenüber dem Rand nach innen versetzt angeordnet sind.

Fig. 9 zeigt nun einen Schnitt durch die Aufwickelspule 61, die auf die Halterung 46 aufgeschoben wird. Die Halterung 46 wird von einem zylindrischen Ansatz 50 gebildet, dessen Außendurchmesser etwas kleiner ist als der Innendurchmesser der zylindrischen Hülse 62 der Aufwickelspule 61. An diese zylindrische Hülse 62 schließt sich ein Scheibenabschnitt 63 an, der an seinem Außenumfang eine Verzahnung 64 trägt. Der Scheibenabschnitt 63 ist auf seiner der Hülse 62 abgewandten Seite vertieft,
so daß er nur mit seinem äußeren Randbereich 65 und
seinem inneren Randbereich 66 auf der Bodenplatte 35
aufliegt, was die Reibung verringert. In Fig. 10 ist
die Verzahnung 64 nur schematisch auf einem kleinen
Teil des Umfanges dargestellt, sie ist tatsächlich jedoch über den gesamten Umfang ausgebildet.

Die Reinigungskassette nach den Fig. 4 bis 10 besteht
aus zwei Teilen, nämlich der einstückigen Bodenplatte 35
und dem Deckel 54, wobei in die Bodenplatte 35 noch das
Reinigungsband einzulegen ist, das auf einer Vorratsspule aufgewickelt sein kann, die in den Innenraum 41
gehört. Das vordere Ende des Reinigungsbandes wird an der
Aufwickelspule 61 befestigt und diese auf die Halterung 46
aufgeschoben. Die Zunge 48 ist so angeordnet, daß sie dann
an der Verzahnung 64 der Spule 61 etwa tangential angreift
und dadurch eine Verrastung der Spule 61 in einer Drehrichtung bewirkt. Der Verlauf des Reinigungsbandes ist
bei der Ausführungsform nach Fig. 4 bis 10 ähnlich wie bei
der Ausführungsform nach Fig. 1 bis 3.

Für ein Kassettengerät, bei dem die Magnetbandkassette
in anderer Richtung eingeschoben wird, kann der dreieckförmige Teil an einer anderen Stelle der Kassette angeordnet sein.

A 21 257 EP                    - 13 -

Bei den dargestellten Ausführungsformen wird das Reinigungsband auf eine Aufwickelspule gewickelt, die als manueller
Antrieb dient. Es ist aber ebenfalls möglich, das Reinigungsband zwischen zwei gerändelten Rädern oder Walzen hindurchzuführen, die das Band fest zwischen sich einzwängen. Dann
kann eine dieser Walzen oder ein Rad als manuelle Transporteinrichtung dienen. Das Reinigungsband kann dann beispielsweise in einen leeren Aufnahmeraum hineinbewegt werden,
wo es sich wahllos zusammenballt. Bei dieser Art des Antriebs
besteht der Vorteil, daß mit jeder Betätigung immer die
gleiche Menge Reinigungsband transportiert wird und die aufzuwendende Betätigungskraft gleichbleibt.

0129841

A 21 257 EP

Anmelder:   Ulrich Willburger
            Auf der Schuchen 27

            D-8110 Seehausen

## Patentansprüche

1. Reinigungskassettte für schnellaufende Kassettengeräte,
   mit einem dem zugehörigen Magnetbandkassettengehäuse
   mindestens teilweise entsprechenden Kassettengehäuse
   (11) und einem darin von einer Vorratsspule (21) vorzugsweise zu einer Aufwickelspule (19, 61) geführten Reinigungsband
   (16), das mindestens in dem dem Magnetkopf entsprechenden
   Bereich etwa den gleichen Verlauf aufweist wie das Magnetband bei der Magnetbandkassette, dadurch gekennzeichnet,
   daß sie eine handbetätigbare Antriebseinrichtung zum
   manuellen Transport des Reinigungsbandes (16) aufweist.

2. Reinigungskassette nach Anspruch 1, dadurch gekennzeichnet,
   daß sie eine Rücklaufsperre zur Verhinderung der Rückwärtsbewegung des Reinigungsbandes (16) und eine Bremseinrichtung zum Straffhalten des Reinigungsbandes (16) aufweist.

3. Reinigungskassette nach Anspruch 1 oder 2, dadurch gekennzeichnet, daß die Antriebseinrichtung eine mit einer
   Umfangsrändelung versehene Walze od. dgl. aufweist.

4. Reinigungskassette nach einem der vorgehenden Ansprüche,
   dadurch gekennzeichnet, daß die Antriebseinrichtung
   von einer mit einer Umfangsrändelung versehenen Aufwickelspule (19,61) gebildet ist.

5. Reinigungskassette nach einem der Ansprüche 2 bis 4,
   dadurch gekennzeichnet, daß die Rücklaufsperre von einer
   federbelasteten, mit einer Umfangsrändelung zusammenwirkenden Sperrklinke gebildet ist.

6. Reinigungskassettte nach Anspruch 5, dadurch gekennzeichnet,
   daß die Sperrklinke von einer einseitig eingespannten
   zungenartigen Blattfeder (32,48) gebildet ist.

7. Reinigungskassette nach einem der vorhergehenden Ansprüche,
   dadurch gekennzeichnet, daß das Reinigungsband (16)
   von einer Bremsrolle (25) straff gehalten ist.

8. Reinigungskassette nach einem der vorhergehenden Ansprüche,
   dadurch gekennzeichnet, daß das Reinigungsband (16)
   eine Breite von mehr als 7 mm, vorzugsweise 10 bis 15
   mm hat.

9. Reinigungskassette nach einem der vorhergehenden Ansprüche,
   dadurch gekennzeichnet, daß sie aus einer Kunststoffbodenplatte (35) mit einer einstückig angeformten Umlenkeinrichtung und einstückig angeformten Halterungen für die
   Vorratsspule und für die Aufwickelspule (62) sowie von
   einem mit der Bodenplatte (35) verbindbaren Kunststoffdeckel (54) gebildet ist.

A 21 257 EP                    - 3 -

10. Reinigungskassette nach Anspruch 9, dadurch gekennzeichnet,
    daß der Kunststoffdeckel (54) über eine Schnappverbindung
    mit der Bodenplatte (35) verbindbar ist.

11. Reinigungskassette nach Anspruch 9 oder 10, dadurch
    gekennzeichnet, daß am Bodenteil (35) einstückig ein
    zungenartiges Federelement (48) angeformt ist, das mit
    einer Umfangsrändelung der Aufwickelspule (61) zur Bildung
    einer Rücklaufsperre zusammenwirkt.

12. Reinigungskassette nach einem der vorhergehenden Ansprüche,
    dadurch gekennzeichnet, daß das Reinigungsband (16)
    ein textiles nicht gewobenes Band ist.

---

0129841

FIG. 2

FIG. 1

FIG.3

FIG. 4

FIG. 5

FIG. 6

FIG. 7

FIG.8

FIG. 10

FIG.9